# EUROPEAN PATENT APPLICATION

(11) **EP 3 447 670 A1**
(43) Date of publication of application: **27.02.2019**
(21) Application number: 18153723.4
(22) Date of filing: 26.01.2018
(51) Int. Cl.: G06F 21/57, G06F 21/44

(54) **UPDATE CONTROL DEVICE, TERMINAL, METHOD OF CONTROLLING UPDATE AND COMPUTER-READABLE MEDIUM**

(30) Priority: 21.08.2017 JP 2017158638
(71) Applicant: KABUSHIKI KAISHA TOSHIBA, Minato-ku Tokyo 105-8001 (JP)
(72) Inventor: XIA, Zhengfan, Tokyo, 105-8001 (JP); KOMANO, Yuichi, Tokyo, 105-8001 (JP); KAWABATA, Takeshi, Tokyo, 105-8001 (JP)
(74) Representative: Moreland, David

(57) **Abstract**

According to an arrangement, an update control device (10) includes a first communication unit (11), a second communication unit (12), and a control unit (15). The first communication unit (11) is configured to receive patch data for each block of the software and first authentication data for each block for authenticating software in a terminal updated using the patch data on a per-block basis. The second communication unit (12) is configured to transmit the patch data and the first authentication data to the terminal on a per-block basis and receive an update result for each block from the terminal. The control unit (15) is configured to request the terminal to perform rollback processing for restoring a first block to an (M-1)th block using the patch data upon receipt of an update result indicating a failure in authenticating an Mth block (M > 1) from the terminal.

## Description

### FIELD

The present disclosure relates to an update control device, a terminal, a method of controlling update, and a computer readable medium.

### BACKGROUND

Such technologies of updating software in a terminal are widely known that update software by distributing patch data corresponding to a difference in the software between before and after update to the terminal and applying the patch data to the software stored in the terminal. Applying patch data to software is generally executed for each block of a specific size. If some trouble occurs during the update, it is required to restore blocks to which the patch data has been applied, to the original conditions. For restoring the software, conventional techniques need to distribute patch data for restoration different from patch data for update to the terminal, which is problematically disadvantageous in efficiency.

### BRIEF DESCRIPTION OF THE DRAWINGS

FIG. 1 is a drawing of a system configuration that schematically illustrates a FW update system;
FIG. 2 is a drawing of an exemplary update file;
FIG. 3 is a block diagram that illustrates an exemplary functional configuration of an update control device;
FIG. 4 is a drawing of an exemplary configuration of a storage unit;
FIG. 5 is a drawing of an exemplary FW management table;
FIG. 6 is a block diagram that illustrates an exemplary functional configuration of an ECU according to a first arrangement;
FIG. 7 is an illustrative sequence diagram of update file download processing;
FIG. 8 is an illustrative sequence diagram of FW update preprocessing;
FIG. 9 is an illustrative sequence diagram of FW update processing (update success);
FIG. 10 is an illustrative sequence diagram of FW update processing (update failure in a first block);
FIG. 11 is an illustrative sequence diagram of FW update processing (update failure in an Mth block) in the first arrangement;
FIG. 12 is an illustrative sequence diagram of rollback processing in the first arrangement;
FIG. 13 is a block diagram that illustrates an exemplary functional configuration of an ECU according to a second arrangement;
FIG. 14 is an illustrative sequence diagram of FW update processing (update failure in an Mth block) in the second arrangement;
FIG. 15 is an illustrative sequence diagram of rollback processing in the second arrangement; and
FIG. 16 is a block diagram that illustrates an exemplary hardware configuration of the update control device.

### DETAILED DESCRIPTION

According to an arrangement, an update control device is configured to control update of software in a terminal connected to a network. The update control device includes a first communication unit, a second communication unit, and a control unit. The first communication unit is configured to receive, from a server outside the network, patch data for each block of the software and first authentication data for each block for authenticating the software updated using the patch data on a per-block basis. The second communication unit is configured to transmit the patch data and the first authentication data to the terminal on a per-block basis via the network and receive an update result for each block from the terminal via the network. The control unit is configured to request the terminal to perform rollback processing for restoring a first block to an (M-1)th block of the software using the patch data upon receipt of an update result indicating a failure in authenticating an Mth block (M > 1) of the software from the terminal.

An update control device, a terminal, a method of controlling update, and a computer readable medium in arrangements will now be described with reference to the drawings. The update control device in the arrangements controls update of software in a terminal connected to a network. An exemplary application to a FW update system for updating FW of an ECU will now be described, using an in-vehicle network mounted on a vehicle as an exemplary network, an electronic control unit (ECU) connected to the in-vehicle network as an exemplary terminal, and firmware (hereinafter described as "FW") of the ECU as exemplary software in the terminal. Applicable systems are not limited to these examples. The arrangements are widely applicable to various systems for updating software in a terminal connected to a network.

### First Arrangement

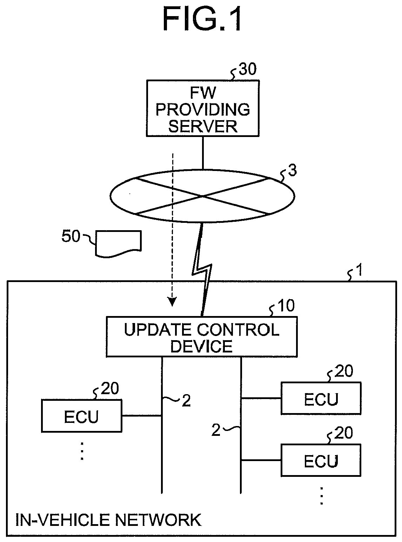

FIG. 1 is a drawing of a system configuration that schematically illustrates a FW update system according to this arrangement. An in-vehicle network 1 includes a plurality of ECUs 20 connected to network buses 2 such as controller area network (CAN) buses and an update control device 10 connected with the ECUs 20 via the network buses 2. The update control device 10 has a function of connecting itself to an external network 3 such as the Internet and is communicably connected with a FW providing server 30 via the external network 3.

A general in-vehicle network 1 includes a device referred to as a gateway that has functions of transferring messages between ECUs 20 connected to respective different network buses 2 and transferring data between outside and inside the vehicle. The update control device 10 of the first arrangement can be implemented by, for example, extending the functions of the gateway. In another configuration, the update control device 10 different from the gateway may be connected with the network buses 2 of the in-vehicle network 1.

Upon request of the update control device 10, the FW providing server 30 generates an update file 50 used for updating FW stored in the ECU 20 and transmits the update file 50 to the update control device 10 via the external network 3. FW before update will be referred to as "current FW", whereas FW after update will be referred to as "new FW".

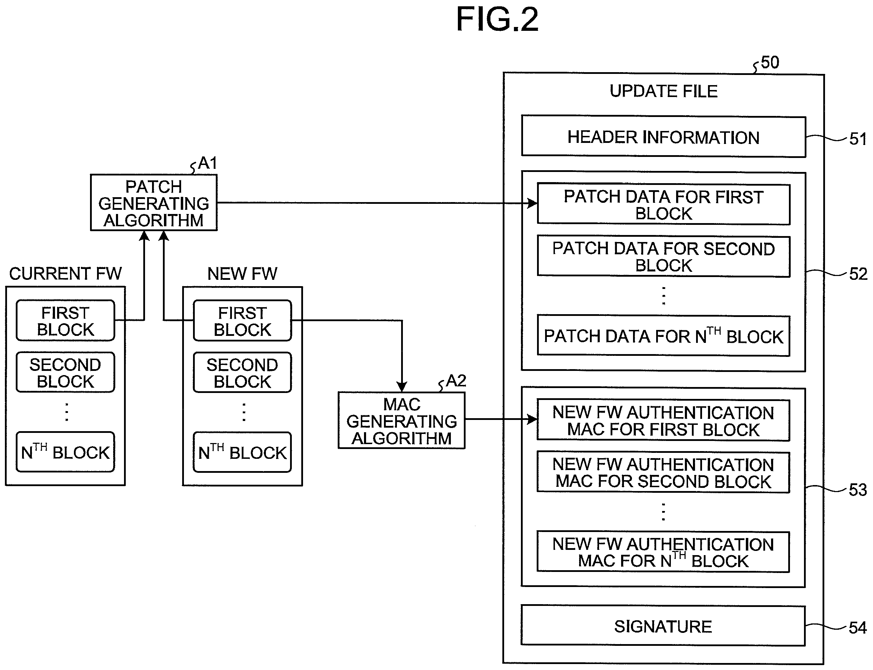

FIG. 2 is a drawing of an exemplary update file 50. As illustrated in FIG. 2, for example, the update file 50 includes header information 51, patch information 52, authentication information 53, and a signature 54.

The header information 51 includes, for example, version information of the new FW and the current FW and information relating to the length of data, the number of blocks, the length of patch data for each block, and others in the new FW and the current FW. A block is a data unit that includes a certain length (a block size) of a sequence of bytes or bits as a unit.

The patch information 52 includes patch data for each block used for updating current FW to new FW. In this arrangement, the patch data for each block is stored in the update file 50 in a compressed manner in accordance with a known data compression format. The patch information 52 is a set of compressed patch data for each block.

The authentication information 53 includes authentication data (first authentication data) for each block used for authenticating the new FW updated from the current FW on a per-block basis. In this arrangement, a message authentication code (MAC) is used as an example of authentication data; however, the arrangements are not limited thereto.

The signature 54 is a digital signature for the header information 51, the patch information 52, and the authentication information 53. The update control device 10 authenticates the signature 54 using a public key of the FW providing server 30, thereby verifying the header information 51, the patch information 52, and the authentication information 53 included in the update file 50 received from the FW providing server 30 through the external network 3.

Patch data for each block is generated using a patch generating algorithm A1. The patch generating algorithm A1 used in this arrangement generates patch data for each block from the current FW and the new FW using, for example, the exclusive-or operation. If the current FW and the new FW have different number of blocks, 0xff is added to the end of either one having fewer blocks so that the current FW and the new FW have the same number of blocks. The number of blocks that is the same between the both is defined as N. The patch generating algorithm A1 extracts a target block from the first block to the Nth block from each of the current FW and the new FW and repeats processing using the exclusive-or operation, thereby generating patch data for N blocks.

The patch data for each block generated in this manner is applied to a target block in the current FW, which allows the block to be updated to the target block in the new FW. Furthermore, the patch data is applied to a target block in the new FW, which allows the block to be restored to the target block of the current FW. In other words, update from the current FW to the new FW and restoration from the new FW to the current FW are allowed using the same patch data. In this arrangement, applying patch data means performing processing based on the exclusive-or operation using a target block of the current FW or a target block of the new FW and the patch data.

Authentication data for each block is generated using a MAC generating algorithm A2. The MAC generating algorithm A2 generates a new FW authentication MAC for each block from the block in the new FW using a secret key shared with the ECU 20. The MAC generating algorithm A2 extracts each target block from the first block to the Nth block in the new FW and performs processing for calculating the MAC for the target block, thereby generating new FW authentication MACs for N blocks.

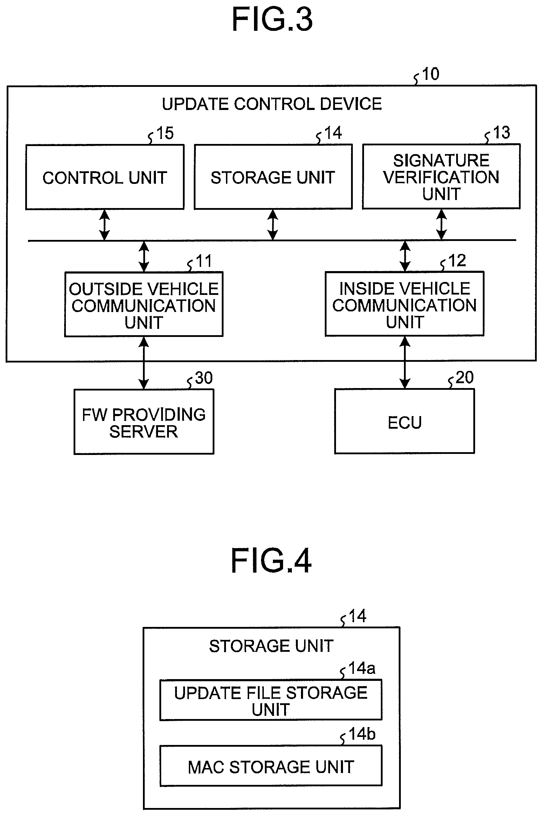

FIG. 3 is a block diagram that illustrates an exemplary functional configuration of the update control device 10. As illustrated in FIG. 3, for example, the update control device 10 includes an outside vehicle communication unit 11 (a first communication unit), an inside vehicle communication unit 12 (a second communication unit), a signature verification unit 13, a storage unit 14, and a control unit 15.

The outside vehicle communication unit 11 communicates with the FW providing server 30 via the external network 3. Examples of communication of the outside vehicle communication unit 11 with the FW providing server 30 include transmission of an update confirmation request, receipt of an update confirmation response, transmission of an update file generating request, receipt of the update file 50, and transmission of a signature verification confirmation response.

The inside vehicle communication unit 12 communicates with the ECUs 20 via the network buses 2 of the in-vehicle network 1. Examples of the communication of the inside vehicle communication unit 12 with the ECUs20 include transmission of a FW update request, receipt of an update possible response, transmission of the header information 51 of the update file 50, receipt of a setting completion response, transmission of patch data and a new FW authentication MAC for each block, receipt of an update result for each block, transmission of a rollback request, receipt of a rollback possible response, transmission of patch data and a current FW authentication MAC (the second authentication data) necessary for rollback operation, receipt of a MAC verification confirmation response in the rollback operation, transmission of an overwriting instruction, and receipt of an overwriting completion response.

The update result for each block of the FW received by the inside vehicle communication unit 12 from the ECU 20 is information indicating whether update of the FW on a per-block basis has succeeded. In this arrangement, the update result includes a MAC verification failure response that indicates failure in MAC verification using a new FW authentication MAC and an overwriting completion response that indicates completion of FW update of a block by overwriting block data of the current FW with block data of the new FW. Upon success of the MAC verification using the new FW authentication MAC, the ECU 20 transmits a MAC verification success response to the update control device 10, and in response to this, the update control device 10 transmits an overwriting instruction to the ECU 20. In response to this overwriting instruction, the ECU 20 updates the FW by overwriting the block data. Upon completion of update, the ECU 20 transmits an overwriting completion response to the update control device 10.

The signature verification unit 13 authenticates the signature 54 included in the update file 50 transmitted from the FW providing server 30 using a public key of the FW providing server 30. When the signature verification unit 13 has succeeded in authentication of the signature 54, the update file 50 transmitted from the FW providing server 30 is temporarily stored in the storage unit 14, and the outside vehicle communication unit 11 transmits a signature verification confirmation response to the FW providing server 30. If the signature verification unit 13 fails to authenticate the signature 54, the update file 50 transmitted from the FW providing server 30 is discarded.

As illustrated in FIG. 4, for example, the storage unit 14 includes an update file storage unit 14a and a MAC storage unit 14b. The update file storage unit 14a temporarily stores therein the update file 50 transmitted from the FW providing server 30. The MAC storage unit 14b stores therein new FW authentication MACs for respective blocks of the new FW in which update has been normally completed, as current FW authentication MACs in preparation for the rollback processing in the future FW update operation.

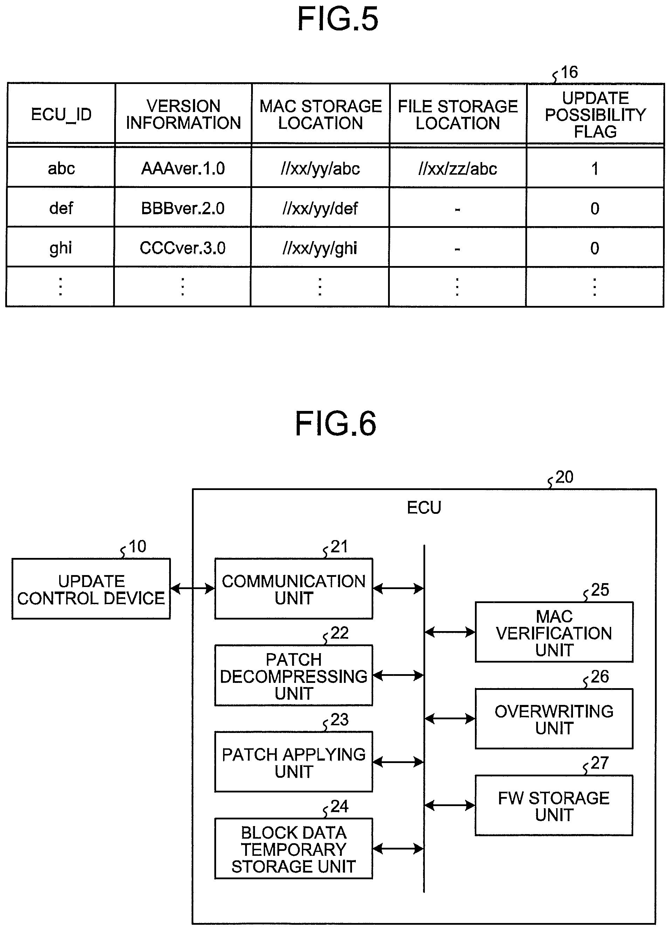

The control unit 15 performs status management and update control on the FW in each ECU 20 connected to the network bus 2 of the in-vehicle network 1. For example, an FW management table 16 as illustrated in FIG. 5 is used for the status management of the FW of each ECU 20. The FW management table 16 has a data structure for storing, for every ECU 20 connected to the network bus 2 of the in-vehicle network 1, "version information" that represents the name and version of the current FW of the ECU 20, a "MAC storage location" that represents a place in the MAC storage unit 14b where the current FW authentication MAC of the ECU 20 is stored, a "file storage location" that represents a place in the update file storage unit 14a where the update file 50 for the ECU 20 is temporarily stored, and an "update possibility flag" that represents whether the FW of the ECU 20 is updatable, in a manner associated with an "ECU_ID" as identification information of the ECU 20.

The control unit 15 performs update control on the FW of the ECU 20 by generating the above-described various kinds of requests, responses, and instructions and causing them to be transmitted from the outside vehicle communication unit 11 to the FW providing server 30 or from the inside vehicle communication unit 12 to the ECU 20 while performing status management of the FW of the ECU 20 using the FW management table 16 as illustrated in FIG. 5. The update control performed on the FW of the ECU 20 will be described later in detail.

FIG. 6 is a block diagram that illustrates an exemplary functional configuration of the ECU 20. As illustrated in FIG. 6, for example, the ECU 20 includes a communication unit 21, a patch decompressing unit 22, a patch applying unit 23, a block data temporary storage unit 24, a MAC verification unit 25, an overwriting unit 26, and a FW storage unit 27.

The communication unit 21 communicates with the update control device 10 through the network buses 2 of the in-vehicle network 1. Examples of the communication of the communication unit 21 with the update control device 10 include receipt of a FW update request, transmission of an update possible response, receipt of the header information 51 of the update file 50, transmission of a setting completion response, receipt of patch data and a new FW authentication MAC for each block, transmission of an update result (a MAC verification failure response or a MAC verification success response and an overwriting completion response) for each block, receipt of a rollback request, transmission of a rollback possible response, receipt of patch data and a current FW authentication MAC necessary for rollback operation, transmission of a MAC verification confirmation response in the rollback operation, receipt of an overwriting instruction, and transmission of an overwriting completion response.

The patch decompressing unit 22 decompresses patch data (compressed patch data) for each block transmitted from the update control device 10 and received by the communication unit 21. The patch data decompressed by the patch decompressing unit 22 is forwarded to the patch applying unit 23.

The patch applying unit 23 generates block data of the new FW using the patch data received from the patch decompressing unit 22 in the FW update operation. The patch applying unit 23 generates block data of the new FW by reading out a target block of the current FW stored in the FW storage unit 27 and performing processing based on the exclusive-or operation using the target block of the current FW and the patch data. In the rollback operation, the patch applying unit 23 generates block data of the current FW using the patch data received from the patch decompressing unit 22. The patch applying unit 23 generates block data of the current FW by reading out a target block of the new FW stored in the FW storage unit 27 and performing processing based on the exclusive-or operation using the target block of the new FW and the patch data. The block data of the new FW or the current FW generated by the patch applying unit 23 is saved and temporarily stored in the block data temporary storage unit 24.

In the FW update operation, the MAC verification unit 25 performs MAC verification on the block data of the new FW temporarily stored in the block data temporary storage unit 24 using the new FW authentication MAC for each block transmitted from the update control device 10 and received by the communication unit 21. In the rollback operation, the MAC verification unit 25 performs MAC verification on the block data of the current FW temporarily stored in the block data temporary storage unit 24 using the current FW authentication MAC for each block transmitted from the update control device 10 and received by the communication unit 21. If the MAC verification unit 25 successes in MAC verification, a MAC verification success response is transmitted from the communication unit 21 to the update control device 10. If the MAC verification unit 25 fails in the MAC verification, a MAC verification failure response is transmitted from the communication unit 21 to the update control device 10.

The overwriting unit 26 reads out block data temporarily stored in the block data temporary storage unit 24 and overwrites a target block stored in the FW storage unit 27 with the block data read out from the block data temporary storage unit 24 in response to an overwriting instruction transmitted from the update control device 10 and received by the communication unit 21. Herewith, each block stored in the FW storage unit 27 is updated from the current FW to the new FW in the FW update operation and a block to be restored is restored from the new FW to the current FW in the rollback operation.

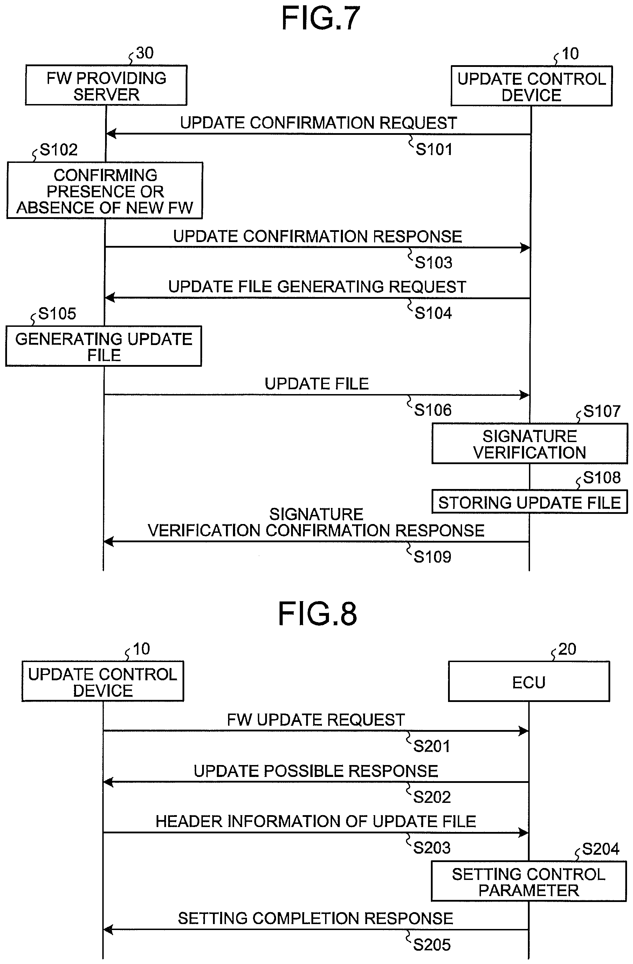

Operation of a FW update system according to the arrangement will now be described. The update file download processing performed by the update control device 10 and the FW providing server 30 will be described based on the sequence diagram of FIG. 7. The update file download processing illustrated in the sequence diagram of FIG. 7 is performed at a predetermined timing or at a timing when the control unit 15 of the update control device 10 receives a prescribed interruption.

The control unit 15 of the update control device 10 generates ECU configuration information including, for example, version information of the current FW in each ECU 20 by referring to the FW management table 16 and forwards it to the outside vehicle communication unit 11. The outside vehicle communication unit 11 transmits an update confirmation request to which the ECU configuration information is added, to the FW providing server 30 (Step S101). In response to the update confirmation request received from the update control device 10, the FW providing server 30 confirms the presence or absence of new FW for any of the ECUs 20 (Step S102) and transmits the result to the update control device 10 as an update confirmation response (Step S103). The case in which new FW for an ECU 20 in the in-vehicle network 1 is present will now be described.

Upon receipt of the update confirmation response indicating the presence of new FW, the outside vehicle communication unit 11 of the update control device 10 transmits an update file generating request to the FW providing server 30 under control of the control unit 15 (Step S104). In response to the update file generating request from the update control device 10, the FW providing server 30 generates the above-described update file 50 (Step S105) and transmits the generated update file 50 to the update control device 10 (Step S106). This update file 50 is received by the outside vehicle communication unit 11 of the update control device 10.

The signature verification unit 13 of the update control device 10 authenticates the signature 54 included in the update file 50 received by the outside vehicle communication unit 11 using a public key of the FW providing server 30 (Step S107). The case in which the signature verification unit 13 has succeeded in signature verification will now be described. When the signature verification unit 13 succeeds in signature verification, the update file 50 received by the outside vehicle communication unit 11 is stored in the update file storage unit 14a of the storage unit 14 (Step S108), and a signature verification confirmation response is transmitted from the outside vehicle communication unit 11 to the FW providing server 30 (Step S109) under control of the control unit 15.

At this time, the control unit 15 of the update control device 10 stores a path (the address of a storage location) to the storage location of the update file 50 in the "file storage location" of the FW management table 16 and updates the "update possibility flag" in the FW management table 16 to a value indicating that the FW is updatable. If the signature verification unit 13 fails in the signature verification, the update file 50 transmitted from the FW providing server 30 is discarded without being stored in the update file storage unit 14a.

FW update preprocessing performed by the update control device 10 and the ECU 20 will now be described based on the sequence diagram of FIG. 8. The FW update preprocessing illustrated in the sequence diagram of FIG. 8 is performed on an ECU 20 with the "update possibility flag" in the FW management table 16a having a value that indicates an updatable state (in other words, a state in which the update file 50 is temporarily stored in the update file storage unit 14a of the storage unit 14) and begins at a timing when the vehicle having the in-vehicle network 1 mounted reaches a FW updatable state. Examples of the method for determining whether the vehicle has reached the FW updatable state includes a method of determining that the vehicle has reached the FW updatable state by notifying the driver of the presence of a FW updatable ECU 20 while recommending the driver to stop the vehicle in updating the FW through, for example, display on the interior console of the vehicle and receiving a FW update instruction through button pressing or the like.

The control unit 15 of the update control device 10 identifies an ECU 20 the "update possibility flag" of which indicates the updatable state by referring to the FW management table 16 and forwards the ECU_ID of the ECU 20 to the inside vehicle communication unit 12. For example, the inside vehicle communication unit 12 sends out a FW update request having the ECU_ID forwarded from the control unit 15 as a destination address, to the network bus 2 and thereby transmits the FW update request to the ECU 20, which is a target of the FW update (Step S201). The ECU 20 having received the FW update request transmits an update possible response to the update control device 10 (Step S202) and enters the FW update state.

When the inside vehicle communication unit 12 of the update control device 10 receives the update possible response transmitted from the ECU 20, the control unit 15 of the update control device 10 reads out the update file 50 temporarily stored in the update file storage unit 14a of the storage unit 14 and causes the inside vehicle communication unit 12 to transmit the header information 51 of the update file 50 to the ECU 20 (Step S203). The ECU 20 having received the header information 51 of the update file 50 sets various kinds of control parameters necessary for the FW update (Step S204) based on the header information 51 and transmits a setting completion response to the update control device 10 upon completion of settings of the control parameters (Step S205).

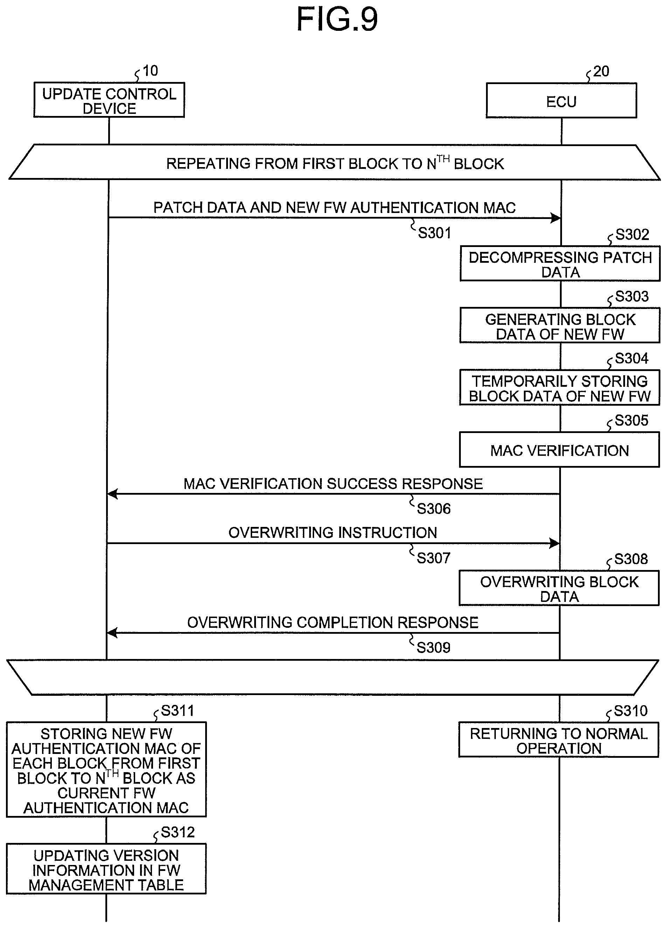

FW update processing performed by the update control device 10 and the ECU 20 will now be described based on the sequence diagrams of FIG. 9 to FIG. 11. The FW update processing illustrated in the sequence diagrams of FIG. 9 to FIG. 11 begins when the update control device 10 receives the setting completion response from the ECU 20.

An example case of success in the FW update will now be described with reference to the sequence diagram of FIG. 9. In the case of success in the FW update, the processing from Step S301 to Step S309 in FIG. 9 is sequentially performed on each target block from a first block being the initial block in the FW, to an Nth block being the last block.

Under control of the control unit 15 of the update control device 10, the inside vehicle communication unit 12 of the update control device 10 transmits patch data and a new FW authentication MAC of a target block to the ECU 20 (Step S301). The ECU 20 receives, by the communication unit 21, the patch data and the new FW authentication MAC of the target block transmitted from the update control device 10 and decompresses, by the patch decompressing unit 22, the patch data of the target block (Step S302). The patch applying unit 23 reads out block data of the target block in the current FW stored in the FW storage unit 27, applies the decompressed patch data of the target block to the block data to thereby generates block data of the target block in the new FW (Step S303), and stores the generated block data in the block data temporary storage unit 24 (Step S304).

In the next step, the MAC verification unit 25 performs MAC verification on the block data of the new FW temporarily stored in the block data temporary storage unit 24 using the new FW authentication MAC for the target block (Step S305). Here, it is assumed that the MAC verification on the block data in the new FW is successfully done. Upon success in the MAC verification on the block data in the new FW, the communication unit 21 of the ECU 20 transmits a MAC verification success response to the update control device 10 (Step S306).

The inside vehicle communication unit 12 of the update control device 10 receives the MAC verification success response transmitted from the ECU 20 and transmits an overwriting instruction to the ECU 20 under control of the control unit 15 (Step S307). When the ECU 20 receives, by the communication unit 21, the overwriting instruction transmitted from the update control device 10, the ECU 20 reads out, by the overwriting unit 26, block data of the new FW temporarily stored in the block data temporary storage unit 24 and overwrite the target block of the current FW stored in the FW storage unit 27 with the block data read out from the block data temporary storage unit 24 (Step S308). The ECU 20 transmits, by the communication unit 21, an overwriting completion response to the update control device 10 (Step S309).

In the case of success in the FW update, the above-described processing from Step S301 to Step S309 is sequentially performed on each block of the FW from the first block to the Nth block. Upon completion of processing on the Nth block as a target block, the ECU 20 moves out of the FW update state and returns to the normal operation (Step S310). In preparation for the case where the rollback processing is needed in the future FW update operation, the control unit 15 of the update control device 10 stores the new FW authentication MAC of each block from the first block to the Nth block as the current FW authentication MAC in the MAC storage unit 14b of the storage unit 14 (Step S311). The control unit 15 of the update control device 10 updates the "version information" of the ECU 20 having undergone the FW update in the FW management table 16 to a value representing the new FW version (Step S312) and completes the processing.

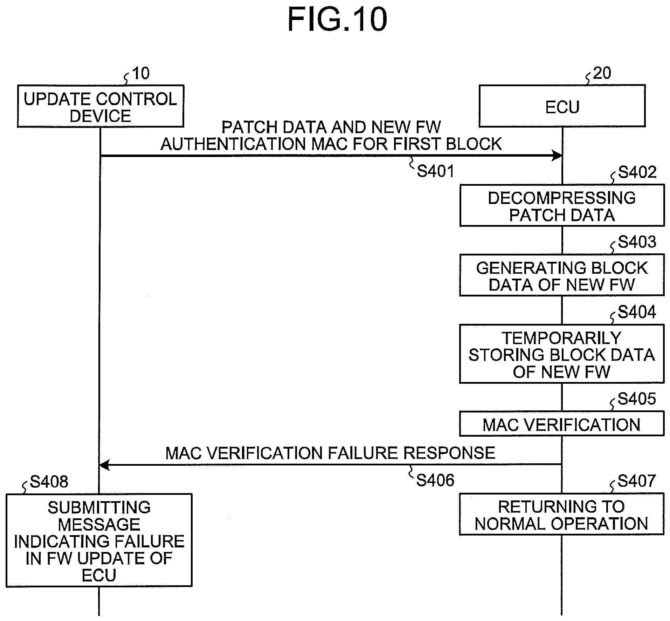

An example case of failure (failure in the MAC verification) in the FW update at the first block of the FW will now be described using the sequence diagram of FIG. 10. The processing of Step S401 to Step S405 in FIG. 10 is the same as the processing of Step S301 to Step S305 in FIG. 9 performed on the first block as a target block, and detailed description will be therefore omitted. Here, it is assumed that the MAC verification on the block data of the first block in the new FW is failed at Step S405.

If the MAC verification on the block data of the first block in the new FW is failed, the ECU 20 transmits, by the communication unit 21, transmit a MAC verification failure response to the update control device 10 (Step S406), and then moves out of the FW update state and returns to the normal operation (Step S407). When the update control device 10 receives, by the inside vehicle communication unit 12, the MAC verification failure response transmitted from the ECU 20, the update control device 10 submits a message to the driver that indicates that the ECU 20 has failed in the FW update through, for example, display on the interior console of the vehicle (Step S408) and completes the processing.

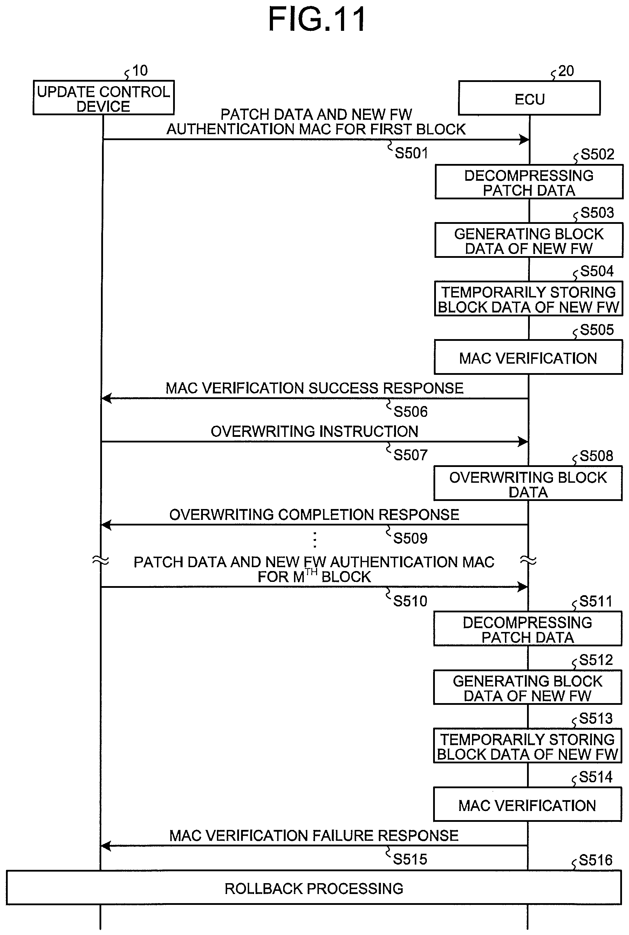

An example case of failure (failure in the MAC verification) in the FW update at an Mth block (M > 1) of the FW will now be described using the sequence diagram of FIG. 11. The processing of Step S501 to Step S509 in FIG. 11 is the same as the processing of Step S301 to Step S309 in FIG. 9 performed on the first block as a target block. In this example, the same processing is repeatedly performed up to an (M-1)th block. Although the processing of Step S510 to Step S514 is the same as the processing of Step S301 to Step S305 in FIG. 9 performed on the Mth block as a target block, it is assumed that the MAC verification on the block data of the Mth block in the new FW is failed at Step S514.

Upon failure in the MAC verification on the block data of the Mth block in the new FW, the ECU 20 transmits, by the communication unit 21, a MAC verification failure response to the update control device 10 (Step S515). The update control device 10 and the ECU 20 perform rollback processing so as to restore the blocks from the first block to the (M-1)th block, which have been updated by being overwritten with the block data of the new FW, to the current FW (Step S516).

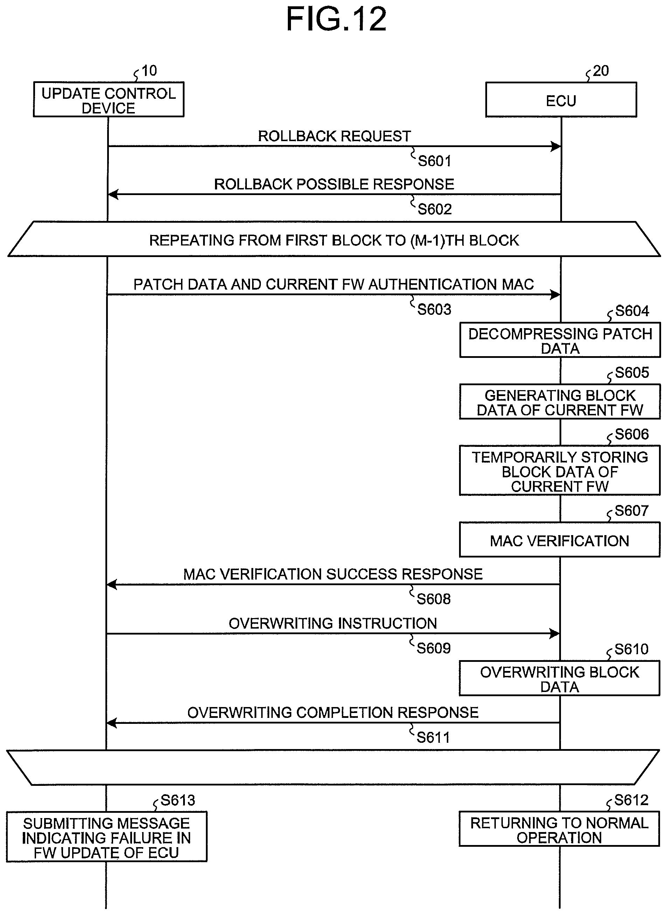

The rollback processing performed at Step S516 in FIG. 11 will now be described in detail based on the sequence diagram of FIG. 12.

Under control of the control unit 15 of the update control device 10, the inside vehicle communication unit 12 of the update control device 10 transmits a rollback request to the ECU 20 (Step S601). The ECU 20 having received the rollback request transmits a rollback possible response to the update control device 10 (Step S602) and enters the rollback state.

In the rollback processing, the processing from Step S603 to Step S611 in FIG. 12 is repeatedly performed on each target block from the first block to the (M-1)th block having been updated by being overwritten with the block data of the new FW.

The control unit 15 of the update control device 10 reads out patch data of a target block from the update file 50 temporarily stored in the update file storage unit 14a of the storage unit 14 as well as reads out the current FW authentication MAC of the target block stored in the MAC storage unit 14b and forwards the patch data and the current FW authentication MAC to the inside vehicle communication unit 12. The inside vehicle communication unit 12 transmits the patch data and the current FW authentication MAC of the target block to the ECU 20 (Step S603).

The ECU 20 receives, by the communication unit 21, the patch data and the current FW authentication MAC of the target block transmitted from the update control device 10 and decompresses, by the patch decompressing unit 22, the patch data of the target block (Step S604). The patch applying unit 23 reads out block data of the target block in the new FW stored in the FW storage unit 27, applies the decompressed patch data of the target block to the block data to thereby generate block data of the target block in the current FW (Step S605), and stores the generated block data in the block data temporary storage unit 24 (Step S606).

The MAC verification unit 25 performs MAC verification on the block data of the current FW temporarily stored in the block data temporary storage unit 24 using the current FW authentication MAC for the target block (Step S607). Here, it is assumed that the MAC verification on the block data in the current FW has been successfully done. In the case of failure in the MAC verification on the block data in the current FW, the ECU 20 becomes an abnormal state in which neither FW update nor restoration can be performed. In this case, such a message is preferably submitted to the driver that indicates that the ECU 20 is in an abnormal state and needs to be handled by a dealer, for example, through display on the interior console of the vehicle.

Upon success in the MAC verification on the block data in the current FW, the communication unit 21 of the ECU 20 transmits a MAC verification success response to the update control device 10 (Step S608). The inside vehicle communication unit 12 of the update control device 10 receives the MAC verification success response transmitted from the ECU 20 and transmits an overwriting instruction to the ECU 20 under control of the control unit 15 (Step S609). When the ECU 20 receives, by the communication unit 21, the overwriting instruction transmitted from the update control device 10, the ECU 20 reads out, by the overwriting unit 26, block data of the current FW temporarily stored in the block data temporary storage unit 24 and overwrite the target block of the new FW stored in the FW storage unit 27 with the block data read out from the block data temporary storage unit 24 and restores the target block to the block data of the current FW (Step S610). The ECU 20 transmits, by the communication unit 21, an overwriting completion response to the update control device 10 (Step S611).

In the rollback processing, the above-described processing from Step S604 to Step S611 is performed on each block to be restored from the first block to the (M-1)th block. Upon completion of processing on the (M-1)th block as a target block, the ECU 20 moves out of the rollback state and returns to the normal operation (Step S612). The update control device 10 submits a message to the driver that indicates that the ECU 20 has failed in FW update through, for example, display on the interior console of the vehicle (Step S613) and completes the processing.

As described above in detail with specific examples, according to this arrangement, in updating the FW of an ECU 20 connected to the network bus 2 of the in-vehicle network 1, the update control device 10 receives, from the FW providing server 30, the update file 50 including patch data for each block of the FW of the ECU 20 to be updated and a new FW authentication MAC for each block for authenticating the new FW updated using the patch data on a per-block basis. The update control device 10 transmits the patch data and the new FW authentication MAC to the ECU 20 on a per-block basis and receives an update result for each block. When the update control device 10 receives an update result indicating a failure in authenticating the Mth block (M > 1) of the FW, the update control device 10 requests the ECU 20 to perform the rollback processing for restoring the first block to the (M-1)th block of the FW using the same patch data as that in the FW update operation. This process allows more efficient update and restoration of the FW in the ECU 20.

For example, if update of the FW is failed at the Mth block and the first block to the (M-1)th block of the FW are accordingly restored by the rollback processing, conventional techniques need to acquire patch data for restoration different from the patch data for update from the FW providing server 30 and transmit the patch data to the ECU 20. In this arrangement, however, update and restoration of the FW can be performed using the same patch data, and this configuration allows more efficient update and restoration of the FW in the ECU 20.

### Second Arrangement

In the above-described first arrangement, in the rollback processing, the update control device 10 transmits patch data and a current FW authentication MAC of a target block to be restored, to the ECU 20. In the second arrangement, the ECU 20 temporarily stores patch data for each block received from the update control device 10 in the FW update operation, and the necessity for the update control device 10 to transmit patch data to the ECU 20 in the rollback processing is therefore eliminated. Furthermore, the ECU 20 performs the rollback processing using the temporarily stored patch data, and the necessity for the update control device 10 to transmit the current FW authentication MAC to the ECU 20 is therefore eliminated. The same description as the first arrangement will be omitted as appropriate, and the parts different from the first arrangement will now be described.

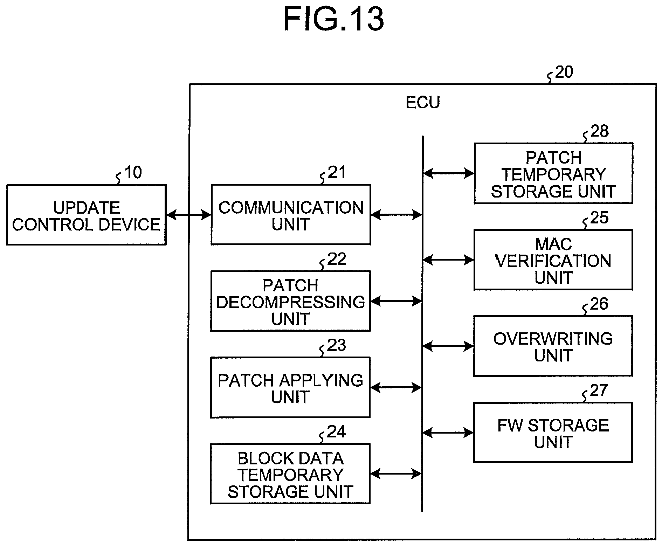

FIG. 13 is a block diagram that illustrates an exemplary functional configuration of the ECU 20 in the second arrangement. The ECU 20 in the second arrangement is configured such that a patch temporary storage unit 28 is added to the configuration of the first arrangement illustrated in FIG. 6. The patch temporary storage unit 28 temporarily stores therein patch data (compressed patch data) for each block transmitted from the update control device 10 and received by the communication unit 21. In the second arrangement, patch data of a target block to be restored is read out from the patch temporary storage unit 28 in the rollback processing, decompressed and applied to the block data in the new FW.

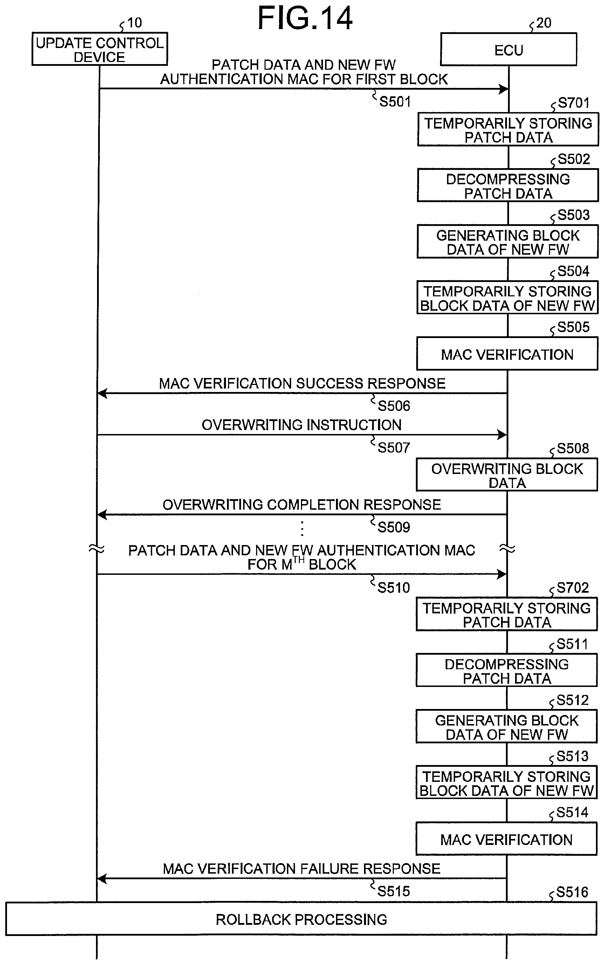

FIG. 14 is an illustrative sequence diagram of FW update processing in the second arrangement and illustrates an example case of failure (failure in the MAC verification) in FW update at the Mth block (M > 1) of the FW. The FW update processing illustrated in the sequence diagram of FIG. 14 is basically the same as the processing in the first arrangement illustrated in the sequence diagram of FIG. 11 except that processing (Step S701 and Step S702) in which the ECU 20 temporarily stores patch data received from the update control device 10 in the patch temporary storage unit 28 is added between Step S501 and Step S502 and between Step S510 and Step S511, respectively.

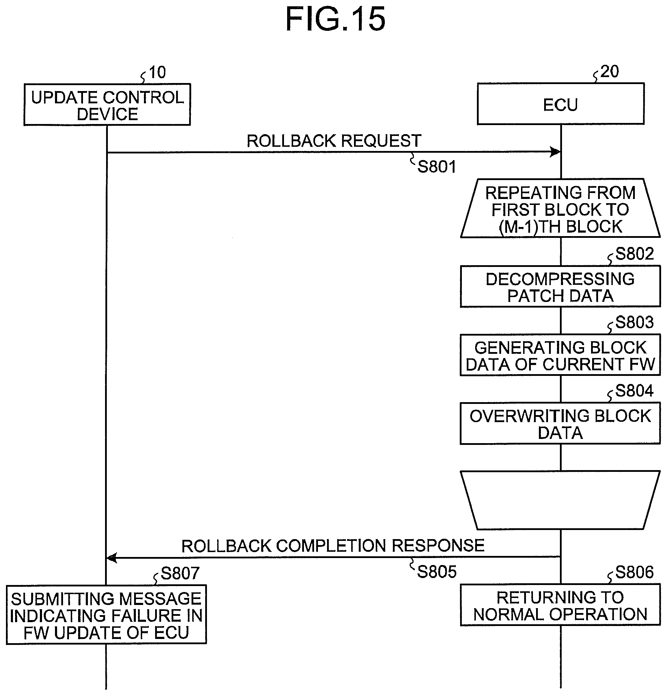

FIG. 15 is an illustrative sequence diagram of the rollback processing in the second arrangement. In the second arrangement, in the rollback processing, the update control device 10 transmits neither patch data nor the current FW authentication MAC to the ECU 20. Instead, patch data temporarily stored in the patch temporary storage unit 28 is used in restoration of a target block to the current FW in the ECU 20. Because the patch data stored in the ECU 20 is assured of its reliability through the MAC verification, repeated MAC verification on the current FW restored by using the current FW authentication MAC is not necessary.

In the second arrangement, under control of the control unit 15 of the update control device 10, the inside vehicle communication unit 12 of the update control device 10 transmits a rollback request to the ECU 20 (Step S801). Upon receipt of the rollback request, the ECU 20 enters the rollback state and repeatedly performs the processing from Step S802 to Step S804 in FIG. 15 on each target block from the first block to the (M-1)th block.

The ECU 20 reads out patch data of a target block from the patch temporary storage unit 28 and decompresses, by the patch decompressing unit 22, the patch data (Step S802). The patch applying unit 23 reads out block data of the target block in the new FW stored in the FW storage unit 27, and applies the decompressed patch data of the target block to the block data, thereby generating block data of the target block in the current FW (Step S803). The overwriting unit 26 overwrites the target block in the new FW stored in the FW storage unit 27 with the block data generated at Step S803 and restores the target block to the block data in the current FW (Step S804).

In the second arrangement, the ECU 20 repeatedly performs the above-described processing of Step S802 to Step S804 on each block to be restored from the first block to the (M-1)th block. Upon completion of the processing on the (M-1)th block as a target block, the ECU 20 transmits, by the communication unit 21, a rollback completion response to the update control device 10 (Step S805), moves out of the rollback state, and returns to the normal operation (Step S806). When the update control device 10 receives, by the inside vehicle communication unit 12, the rollback completion response transmitted from the ECU 20, the update control device 10 submits a message to the driver that indicates that the ECU 20 has failed in FW update through, for example, display on the interior console of the vehicle (Step S807) and completes the processing.

As described above, in the second arrangement, the ECU 20 temporarily stores patch data for each block received from the update control device 10 in the FW update operation and performs the rollback processing using the temporarily stored patch data when the rollback processing is needed. This configuration enables a reduction in the amount of communication between the update control device 10 and the ECU 20 during the rollback processing and renders the MAC verification processing in the ECU 20 unnecessary, which allows more efficient FW update and restoration of the ECU 20.

### Supplemental remarks

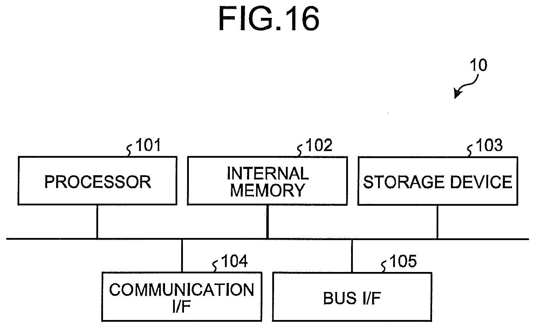

The update control device 10 in the above-described arrangements is implemented by, for example, using a hardware configuration of an ordinary computer system. FIG. 16 is a block diagram that illustrates an exemplary hardware configuration of the update control device 10 of the above-described arrangements. As illustrated in FIG. 16, for example, the update control device 10 includes a processor (a processor circuit) 101 such as a central processing unit (CPU) and a graphics processing unit (GPU), an internal memory 102 such as a random access memory (RAM) and a read only memory (ROM), a storage device 103 such as a hard disk drive (HDD) and a solid state drive (SDD), a communication I/F 104 as a physical interface for connecting the device to the external network 3, and a bus I/F 105 as a physical interface for connecting the device to the network bus 2 of the in-vehicle network 1.

For example, with the processor 101 executing a certain control program stored in the storage device 103, the internal memory 102, or the like using the internal memory 102 as a workspace, functions of the above-described signature verification unit 13 and the control unit 15 can be implemented. Furthermore, with the processor 101 executing the control program and controlling operation of the communication I/F 104, the function of the above-described outside vehicle communication unit 11 can be implemented. With the processor 101 executing the control program and controlling operation of the bus I/F 105, the function of the above-described inside vehicle communication unit 12 can be implemented. The function of the above-described storage unit 14 can be implemented by using the storage device 103.

The control program for implementing functional components of the update control device 10 is recorded, for example, in a magnetic disk (a flexible disk, a hard disk, and others), an optical disk (a CD-ROM, a CD-R, a CD-RW, a DVD-ROM, a DVD-R/+R, a DVD-RW/+RW, a Blu-ray (registered trademark) disc, and others), a semiconductor memory, and other similar memory media and is provided. The memory medium for recording the program may be in any memory format as long as the memory medium is readable by a computer. The above-described control program may be preinstalled on the computer system of the update control device 10 or may be distributed through a network and installed on the computer system as appropriate.

A part of or all the functional components of the update control device 10 in the above-described arrangements may be implemented by dedicated hardware such as an application specific integrated circuit (ASIC) and a field-programmable gate array (FPGA).

The update control device 10 in the above-described arrangements is not necessarily configured as a single device and is implemented by causing a plurality of devices (computers) to cooperate. The functional components of the above-described update control device 10 may be implemented by a plurality of devices (computers) in a distributed manner. The update control device 10 in the above-described arrangements may be a virtual machine operating on the cloud system.

While certain arrangements have been described, these arrangements have been presented by way of example only, and are not intended to limit the scope of the claims. Indeed, the devices described herein may be embodied in a variety of other forms; furthermore various omissions, substitutions and changes in the form of the devices described herein may be made.
Example 1. An update control device is configured to control update of software in a terminal connected to a network. The update control device includes a first communication unit, a second communication unit, and a control unit. The first communication unit is configured to receive, from a server outside the network, patch data for each block of the software and first authentication data for each block for authenticating the software updated using the patch data on a per-block basis. The second communication unit is configured to transmit the patch data and the first authentication data to the terminal on a per-block basis via the network and receive an update result for each block from the terminal via the network. The control unit is configured to request the terminal to perform rollback processing for restoring a first block to an (M-1)th block of the software using the patch data upon receipt of an update result indicating a failure in authenticating an Mth block (M > 1) of the software from the terminal.
Example 2. In the update control device according to Example 1, the patch data is data obtained on a per-block basis by performing processing based on an exclusive-or operation using the software before update and the software after update.
Example 3. In the update control device according to Example 1 or 2, the second communication unit is configured to, when the control unit requests the terminal to perform the rollback processing, transmit the patch data corresponding to the first block to the (M-1)th block of the software to the terminal via the network.
Example 4. In the update control device according to Example 3, the second communication unit is configured to, when the control unit requests the terminal to perform the rollback processing, further transmit, out of second authentication data for each block for authenticating the software before update on a per-block basis, second authentication data corresponding to the first block to the (M-1)th block of the software to the terminal via the network.
Example 5. In the update control device according to Example 1 or 2, the terminal is configured to temporarily store the patch data received from the update control device and, when the control unit requests to perform the rollback processing, restore the first block to the (M-1)th block of the software using patch data corresponding to the first block to the (M-1)th block of the software, out of the temporarily stored patch data.
Example 6. In the update control device according to any one of Examples 1 to 5, the network is an in-vehicle network. The terminal is an electronic control device connected to the in-vehicle network.
Example 7. A terminal is configured to communicate with an update control device via a network. The terminal includes a storage unit, a communication unit, a patch applying unit, and an authentication unit. The storage unit is configured to store software. The communication unit is configured to receive, on a per-block basis of the software, patch data and first authentication data for authenticating a block of the software updated using the patch data, from the update control device via the network. The patch applying unit is configured to apply the patch data on a per-block basis of the software. The authentication unit is configured to authenticate the software to which the patch data has been applied, using the first authentication data on a per-block basis of the software. The patch applying unit is configured to, upon failure in authenticating an Mth block (M > 1) of the software, restore a first block to an (M-1)th block of the software using the patch data.
Example 8. A method controls update of software in a terminal connected to a network. The method includes: receiving patch data for each block of the software and first authentication data for each block for authenticating the software updated using the patch data on a per-block basis from a server outside the network; transmitting the patch data and the first authentication data to the terminal on a per-block basis via the network; receiving an update result for each block from the terminal via the network; and requesting the terminal to perform rollback processing for restoring a first block to an (M-1)th block of the software using the patch data upon receipt of an update result indicating a failure in authenticating an Mth block (M > 1) of the software from the terminal.
Example 9. A computer readable medium includes programmed instructions. The instructions cause a computer configured to control update of software in a terminal connected to a network, to execute: receiving patch data for each block of the software and first authentication data for each block for authenticating the software updated using the patch data on a per-block basis from a server outside the network; transmitting the patch data and the first authentication data to the terminal on a per-block basis via the network and receiving an update result for each block from the terminal via the network; and requesting the terminal to perform rollback processing for restoring a first block to an (M-1)th block of the software using the patch data upon receipt of an update result indicating a failure in authenticating an Mth block (M > 1) of the software from the terminal.

## Claims

1. An update control device (10) configured to control update of software in a terminal (20) connected to a network (2), the update control device (10) comprising:
a first communication unit (11) configured to receive, from a server outside the network (2), patch data for each block of the software and first authentication data for each block for authenticating the software updated using the patch data on a per-block basis;
a second communication unit (12) configured to transmit the patch data and the first authentication data to the terminal (20) on a per-block basis via the network (2) and receive an update result for each block from the terminal (20) via the network (2); and
a control unit (15) configured to request the terminal (20) to perform rollback processing for restoring a first block to an (M-1)th block of the software using the patch data used to update the first block to the (M-1)th block of the software, upon receipt of an update result indicating a failure in authenticating an Mth block (M > 1) of the software from the terminal (20).

2. The update control device (10) according to claim 1, wherein the patch data is data obtained on a per-block basis by performing processing based on an exclusive-or operation using the software before update and the software after update.

3. The update control device (10) according to claim 1 or 2, wherein the second communication unit (12) is configured to, when the control unit (15) requests the terminal (20) to perform the rollback processing, transmit the patch data corresponding to the first block to the (M-1)th block of the software to the terminal (20) via the network (2).

4. The update control device (10) according to claim 3, wherein the second communication unit (12) is configured to, when the control unit (15) requests the terminal (20) to perform the rollback processing, further transmit, out of second authentication data for each block for authenticating the software before update on a per-block basis, second authentication data corresponding to the first block to the (M-1)th block of the software to the terminal (20) via the network (2).

5. The update control device (10) according to claim 1 or 2, wherein the terminal (20) is configured to temporarily store the patch data received from the update control device (10) and, when the control unit (15) requests to perform the rollback processing, restore the first block to the (M-1)th block of the software using patch data corresponding to the first block to the (M-1)th block of the software, out of the temporarily stored patch data.

6. The update control device (10) according to any one of claims 1 to 5, wherein
the network (2) is an in-vehicle network, and
the terminal (20) is an electronic control device connected to the in-vehicle network.

7. A terminal (20) configured to communicate with an update control device (10) via a network (2), the terminal (20) comprising:
a storage unit (27) configured to store software;
a communication unit (21) configured to receive, on a per-block basis of the software, patch data and first authentication data for authenticating a block of the software updated using the patch data, from the update control device (10) via the network (2);
a patch applying unit (23) configured to apply the patch data on a per-block basis of the software; and
an authentication unit (25) configured to authenticate the software to which the patch data has been applied, using the first authentication data on a per-block basis of the software, wherein
the patch applying unit (23) is configured to, upon failure in authenticating an Mth block (M > 1) of the software, restore a first block to an (M-1)th block of the software using the patch data used to update the first block to the (M-1)th block of the software.

8. A method of controlling update of software in a terminal (20) connected to a network (2), the method comprising:
receiving patch data for each block of the software and first authentication data for each block for authenticating the software updated using the patch data on a per-block basis from a server outside the network (2) (S106);
transmitting the patch data and the first authentication data to the terminal (20) on a per-block basis via the network (2) (S501);
receiving an update result for each block from the terminal (20) via the network (2) (S506); and
requesting the terminal (20) to perform rollback processing for restoring a first block to an (M-1)th block of the software using the patch data used to update the first block to the (M-1)th block of the software, upon receipt of an update result indicating a failure in authenticating an Mth block (M > 1) of the software from the terminal (20) (S601).

9. A computer readable medium comprising programmed instructions, the instructions causing a computer configured to control update of software in a terminal (20) connected to a network (2), to execute:
receiving patch data for each block of the software and first authentication data for each block for authenticating the software updated using the patch data on a per-block basis from a server outside the network (2) (S106);
transmitting the patch data and the first authentication data to the terminal (20) on a per-block basis via the network (2) (S501);
receiving an update result for each block from the terminal (20) via the network (2) (S506); and
requesting the terminal (20) to perform rollback processing for restoring a first block to an (M-1)th block of the software using the patch data used to update the first block to the (M-1)th block of the software, upon receipt of an update result indicating a failure in authenticating an Mth block (M > 1) of the software from the terminal (20) (S601).
